# EUROPEAN PATENT SPECIFICATION

(11) **EP 3 945 264 B1**
(45) Date of publication and mention of the grant of the patent: **14.05.2025**
(21) Application number: 20461552.0
(22) Date of filing: 26.07.2020
(51) Int. Cl.: F24H 1/12, F24H 9/00, F24H 9/12, F24H 9/18, H05B 3/50, B60H 1/22

(54) **ELECTRIC FLUID HEATER**
ELEKTRISCHER FLÜSSIGKEITSERHITZER
CHAUFFE-FLUIDE ÉLECTRIQUE

(43) Date of publication of application: 02.02.2022
(73) Proprietor: Valeo Autosystemy SP. Z.O.O., 32 050 Skawina (PL)
(72) Inventor: SZOSTEK, Dawid, 32 050 Skawina (PL); JURKIEWICZ, Damian, 32 050 Skawina (PL); BUREK, Dariusz, 32 050 Skawina (PL)
(74) Representative: Valeo Systèmes Thermiques

(56) References cited:
- EP-A1- 3 334 245
- WO-A1-2004/065874
- WO-A1-2009/156364
- DE-A1- 102017 219 433
- US-A1- 2006 219 394
- US-A1- 2009 250 201

## Description

### FIELD OF THE INVENTION

The field of the present invention is that of devices for heating and circulating a fluid for vehicles. The invention applies more particularly to electric heating and/or air-conditioning devices for motor vehicles comprising such devices.

### BACKGROUND OF THE INVENTION

It is known that the heating of the air intended for heating the passenger compartment of a motor vehicle, or for demisting or defrosting, is provided by the passage of a flow of air through a heat exchanger, more precisely by a heat exchange between this flow of air and a fluid circulating inside the exchanger. This may in particular be the cooling fluid in the case of a heat engine.

In the case of an electric vehicle, it is also known to use an air-conditioning loop operating in heat pump mode for air heating. However, this mode of air heating can also be unsuitable or insufficient.

This is because the performance of the air-conditioning circuit in heat pump mode depends on the outdoor climatic conditions. For example, when the outside air is too cold, the air cannot be heated to a temperature sufficient to warm the passenger compartment. In this context, it is known to add to the fluid circulation loops an additional electric device for thermal conditioning of the fluid such as an additional electric heating device. Such an additional electric heating device can be adapted to heat a suitable fluid upstream of the heat exchanger. In a known way, such an electric additional heating device comprises one or more thermal modules in contact with the fluid to be heated. More precisely, and as may be disclosed in particular in document WO15082434, a thermal module may comprise a core and a heating element surrounding the core, both being spaced apart in order to define a fluid circulation space between the core and the inner surface of the heating element. The heating element is a source of thermal energy. The heating element has electric heating means, e.g. one or more heating resistors serigraphically formed as serigraphic resistive tracks on the outer surface of the heating element. A fluid circulation in the circulation space between the core and the heating element ensures a heat transfer between the heating element and the fluid. In order to obtain sufficient heating power for the desired operation, it may be necessary to multiply the thermal modules in the same additional electric heating device.

Fluid circulation is facilitated by a pump, which is arranged upstream or downstream of the heat exchanger on a fluid circulation pipe.

The present invention relates to an electric heating block, such as a heating block for a motor vehicle. Electric heating block comprising tubes for receiving heating elements are known as electric heating blocks. Such heating elements include, for example, PTC (positive temperature coefficient) resistors. Such heating blocks also include heat sinks, e.g. fins, in thermal contact with the heating elements. The tubes serve to electrically insulate the heating elements from the outside while allowing thermal conduction between the heating elements and the heat sinks.

US2006219394A1 discloses a headerless heat exchanger having a core comprised of a stack of flat tubes of rectangular cross section through which a first heat exchange fluid passes. The tubes are expanded in height at their end portions to provide spaces between adjacent plate pairs for passage of a second heat exchange fluid between the tubes. The sides of the tubes are coplanar, at least in the end portions of the tubes, to provide flat surfaces along which the core is sealed to side plates of the heat exchanger, for example by brazing or welding. The side plates may be separately formed or may comprise part of a continuous housing. The tubes can be formed from plate pairs having nesting side walls.

WO2009156364A1 discloses a heat exchanger comprising exchanging elements and a housing for receiving said exchanging elements. The housing consists of a plurality of interconnected walls. The housing comprises two L-shaped walls.

It would be desirable to provide an electric heater design which would be cost efficient and/or simple to manufacture.

### SUMMARY OF THE INVENTION

The object of the invention is an electric fluid heater for a vehicle, comprising a heating block comprising an inlet and an outlet for the fluid, a first channel for the fluid intended to flow between the inlet and the outlet, a first tube and a second tube
**characterized in that** opposing ends of the first tube and second tube are mounted in headers, wherein the tubes comprise heating elements, and wherein the first channel is delimited by a top plate and a bottom plate sealingly connected to the first tube, the second tube and the headers.

Preferably, the first tube and the second tube comprise two side walls connecting the large walls, wherein the top plate and the bottom plate are connected to side walls of the first tube and the second tube.

Preferably, the large walls of the first tube and the second tube are arranged perpendicularly with respect to the top plate and the bottom plate.

Preferably, a side plate is connected parallel to the first tube and/or the second tube on the exterior of the heating block.

Preferably, the side plate is distanced from the headers and the top plate and the bottom plate.

Preferably, the top plate comprises at at least one of the end portions a raised section.

Preferably, the bottom plate comprises at at least one of the end portions a raised section.

Preferably, the inlet and the outlet are each connected to one of the raised portions.

In one option, both the inlet and the outlet are connected to the top plate.

In another option, wherein the inlet is connected to the top plate, while the outlet is connected to the bottom plate.

Preferably, the headers comprise a pair of protrusions extending perpendicularly to the axis of the first tube and/or the second tube.

Preferably, between the first tube and the second tube there is one or more further tubes.

### BRIEF DESCRITPTION OF DRAWINGS

Examples of the invention will be apparent from and described in detail with reference to the accompanying drawings, in which:
Fig. 1 shows an electric heater according to the invention;
Fig. 2 shows an example of heater tube;
Fig. 3 shows a partial cross-section of the heater of Fig. 1;
Fig. 4 presents another configuration of the heater;
Fig. 5 shows yet another configuration of the heater.

### DETAILED DESCRIPTION OF EMBODIMENTS

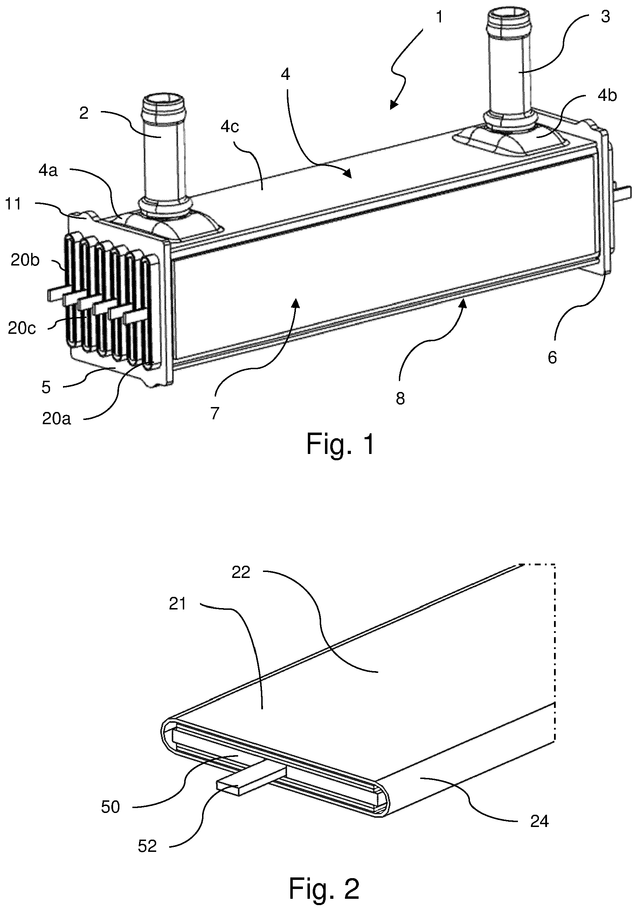

As illustrated in Fig. 1, the invention relates to an electric heating block 1. The said heating block 1 is intended to be supplied with electric current to heat a fluid passing through the said block 1.

The electric heating block 1 advantageously presents a substantially parallelepipedal configuration. It is intended to exchange heat with a fluid passing between an inlet 2, between and/or around tubes 20, and outlet 3. The tubes 20 comprise at least a first tube 20a and a second tube 20b.

Electric fluid heater comprises a heating block 1 comprising an inlet 2 and an outlet 3 for the fluid. Therein, a first channel 100 for the fluid intended to flow between the inlet 2 and the outlet 3 is formed. The heater further comprises a first tube 20a and a second tube 20b with opposing ends mounted in headers 5, 6, wherein the tubes 20a, 20b comprise heating elements 50. The first channel 100 is delimited by a top plate 4 and a bottom plate 8 sealingly connected to the first tube 20a, the second tube 20b and the headers 5, 6. The tubes 20 are mounted in headers 5 and 6, which in turn are connected by top plate 4. To the top plate 4 there may be connected also the inlet 2 and the outlet 3 for the fluid. In particular, the top plate 4 may comprise raised portions 4a and 4b, which are connected to each other by a connecting portion 4c. Since the raised portions 4a and 4b are located at a different distance from the tubes 20 than the connecting portion 4c, i.e. at the greater distance from the tubes 20, the fluid is enabled to flow more freely in the vicinity of the inlet 2 and the outlet 3, thereby facilitating its distribution between and/or around the tubes 20. The channel for the fluid is closed from the bottom by the bottom plate 8, so that the fluid path is limited and an efficient heat exchange with the tubes 20 can take place. The headers 5, 6 may comprise protrusions 11 serving as positioning aid during assembly. This may be useful if slots for the tubes 20 are of different character between two sides of the headers 5, 6, e.g. slots on one side may have widening for facilitated insertion of tubes during assembly. Optionally, a side plate 7 is connected parallel to the first tube 20a and/or the second tube 20b on the exterior of the heating block 1, for thermal insulation and/or for improving the rigidity of the assembly. In one option, the side plate 7 may be distanced from the headers 5, 6 and the top plate 4 and the bottom plate 8.

Fig. 2 shows an example of heater tube 20. The heating block 1 here comprises several tubes 20 and, preferably, several fins 30, or turbulators, alternately stacked in a vertical stacking direction as shown in the figure. The tubes 20 are positioned parallel to each other. These tubes 20 are used to electrically insulate and protect the heating element(s) 50 from the outside. The fins form heat sinks, which increase the heat exchange surface with the fluid.

Heating elements 50 are, for example, PTC resistors (for positive temperature coefficient). Each tube 20 may have several heating elements, which may be arranged one after the other in a direction of the tube 20. The heating elements 50 are preferably distributed evenly along the tubes 20.

The tubes 20 together with the heating elements 50 form heating units. The heating units are preferably supplied with power selectively. This means that the heating elements 50 of each heating unit are supplied with current independently of the heating elements 50 of the other heating units and can therefore be supplied with a different current, in particular in terms of its intensity, from the current flowing through the other heating units.

The heating units also have electrodes 52 on both sides of the heating elements 50 for their power supply. The said heating units further comprise electrically insulating and thermally conductive material layers, the said layers being located between one of the electrodes 52 and a large wall 21 of the tube 20. In this way, the tube 20 is electrically insulated from the electrodes 52 and the heating elements 50 but thermally in contact with them.

Preferably, in each of the heating units, said heating elements 50 are electrically connected in parallel, in particular by means of the electrodes 52.

The fins 30 are in thermal contact with the tubes 20. The said fins 30 are positioned between the said tubes 20, in particular between the large walls 21 of the said tubes 20.

The tubes 20 have two side walls 24 connecting the large walls 21. The large walls 21 each have an external face 22 to which the fin 10 is fixed and an internal face intended to come into thermal contact with the heating elements 50. Thermal contact involves heat exchange between the elements, even if the elements are not in direct physical contact with each other. The function of the large walls 21 is to transmit the heat generated by the electric heating elements 50 to the fins. The tube 20 can be made of any material suitable for use in an electric heating block 1. In particular, tube 20 is made of aluminium and/or aluminium alloy.

The top plate 4 and the bottom plate 8 are sealingly connected to side walls 24 of the first tube 20a and the second tube 20b.

Advantageously, the inner faces of the side walls 24 of the tube 20 have a substantially vertical profile, if necessary slightly rounded.

Both the large walls 21 and the side walls 24 are made from the material of the tube 20. Even if several parts are defined, the tube is a single piece.

Fin 30 is advantageously attached to one or both of the large walls 21 of tube 20 by brazing. This fin fixing technique has several advantages. First of all, brazing the fins to tube 20 improves the heat exchange between the heating elements 50 and the fins. In addition, once tube 20 has been brazed, the material of tube 20, for example aluminium, will be more malleable and more easily deformable than before the brazing step, even after it has cooled to room temperature. This reduces the elastic relaxation that the material may have after deformation. In addition, this state of material guarantees a tight contact between the tube 20 and the heating elements 50 and therefore a better heat exchange. Brazing also ensures a longer life for tube 20 as it will be less sensitive to temperature changes and relaxation during the life of heating block 1.

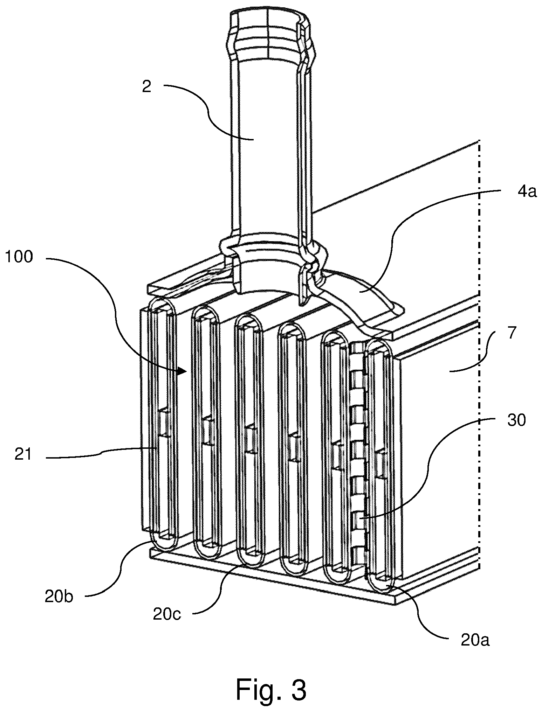

Fig. 3 shows a partial cross-section of the heater of Fig. 1. As can be seen, the large walls 21 of the first tube 20a and the second tube 20b are arranged perpendicularly with respect to the top plate 4 and the bottom plate 8. Between the first tube 20a and the second tube 20b there may be one or more further tubes 20c.

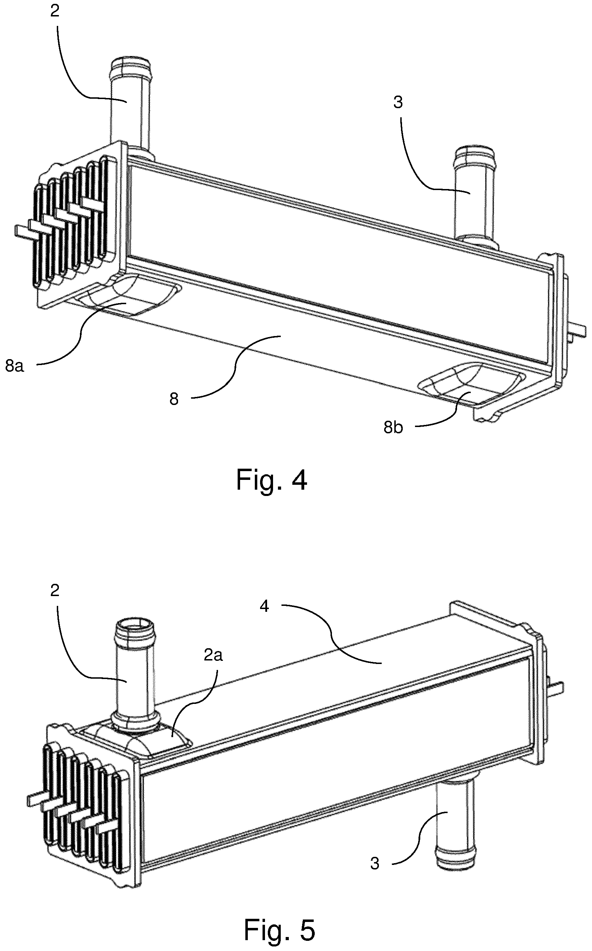

Fig. 4 presents another configuration of the heater. The bottom plate 8 comprises at least one of the end portions a raised section 8a, 8b. In this case, the raised portions 8a, 8b is located at both ends. This may promote fluid distribution.

Fig. 5 shows yet another configuration of the heater. In this example, the inlet 2 is connected to the top plate 4, while the outlet 3 is connected to the bottom plate 8.

Other variations to the disclosed embodiments can be understood and effected by those skilled in the art in practicing the claimed invention, from a study of drawings, the disclosure, and the appended claims. The mere fact that certain measures are recited in mutually different dependent claims does not indicate that a combination of these measures cannot be used to the advantage.

## Claims

1. Electric fluid heater for a vehicle, comprising a heating block 1 comprising an inlet (2) and an outlet (3) for the fluid, a first channel (100) for the fluid intended to flow between the inlet (2) and the outlet (3), a first tube (20a) and a second tube (20b)
**characterized in that** opposing ends of the first tube (20a) and the second tube (20b) are mounted in headers (5, 6), wherein the tubes (20a, 20b) comprise heating elements (50) and wherein the first channel (100) is delimited by a top plate (4) and a bottom plate (8) sealingly connected to the first tube (20a), the second tube (20b) and the headers (5, 6).

2. Electric fluid heater according to claim 1, wherein the first tube (20a) and the second tube (20b) comprise two side walls (24) connecting the large walls (21), wherein the top plate (4) and the bottom plate (8) are connected to side walls (24) of the first tube (20a) and the second tube (20b).

3. Electric fluid according to any preceding claim, wherein the large walls (21) of the first tube (20a) and the second tube (20b) are arranged perpendicularly with respect to the top plate (4) and the bottom plate (8).

4. Electric fluid heater according to any preceding claim, wherein a side plate (7) is connected parallel to the first tube (20a) and/or the second tube (20b) on the exterior of the heating block (1).

5. Electric fluid heater according to claim 4, wherein the side plate (7) is distanced from the headers (5, 6) and the top plate (4) and the bottom plate (8).

6. Electric fluid heater according any of the preceding claims, wherein the top plate (4) comprises at at least one of the end portions a raised section (4a, 4b).

7. Electric fluid heater according any of the preceding claims, wherein the bottom plate (8) comprises at at least one of the end portions a raised section (8a, 8b).

8. Electric fluid heater according to claim 5 or 6, wherein the inlet (2) and the outlet (3) are each connected to one of the raised portions (4a, 4b, 8a, 8b).

9. Electric fluid heater according to any preceding claim, wherein both the inlet (2) and the outlet (3) are connected to the top plate (4).

10. Electric fluid heater according to any of claims 1-8, wherein the inlet (2) is connected to the top plate (4), while the outlet (3) is connected to the bottom plate (8).

11. Electric fluid heater according to claim 7, wherein the headers (5, 6) comprise a pair of protrusions (11) extending perpendicularly to the axis of the first tube (20a) and/or the second tube (20b).

12. Electric fluid heater according to any preceding claim, wherein between the first tube (20a) and the second tube (20b) there is one or more further tubes (20c).

## Patentansprüche

1. Elektrischer Flüssigkeitserhitzer für ein Fahrzeug, umfassend einen Heizblock 1 mit einem Einlass (2) und einem Auslass (3) für die Flüssigkeit, einem ersten Kanal (100) für die Flüssigkeit, die dazu ausgelegt ist, zwischen dem Einlass (2) und dem Auslass (3) zu strömen, einem ersten Rohr (20a) und einem zweiten Rohr (20b), **dadurch gekennzeichnet, dass** gegenüberliegende Enden des ersten Rohrs (20a) und des zweiten Rohrs (20b) in Sammlern (5, 6) montiert sind, wobei die Rohre (20a, 20b) Heizelemente (50) umfassen und wobei der erste Kanal (100) durch eine obere Platte (4) und eine untere Platte (8) begrenzt ist, die dicht mit dem ersten Rohr (20a), dem zweiten Rohr (20b) und den Sammlern (5, 6) verbunden sind.

2. Elektrischer Flüssigkeitserhitzer nach Anspruch 1, wobei das erste Rohr (20a) und das zweite Rohr (20b) zwei Seitenwände (24) umfassen, die die großen Wände (21) verbinden, wobei die obere Platte (4) und die untere Platte (8) mit Seitenwänden (24) des ersten Rohrs (20a) und des zweiten Rohrs (20b) verbunden sind.

3. Elektrischer Flüssigkeitserhitzer nach einem der vorhergehenden Ansprüche, wobei die großen Wände (21) des ersten Rohrs (20a) und des zweiten Rohrs (20b) rechtwinklig zur oberen Platte (4) und zur unteren Platte (8) angeordnet sind.

4. Elektrischer Flüssigkeitserhitzer nach einem der vorhergehenden Ansprüche, wobei eine Seitenplatte (7) parallel zum ersten Rohr (20a) und/oder zum zweiten Rohr (20b) an der Außenseite des Heizblocks (1) angebracht ist.

5. Elektrischer Flüssigkeitserhitzer nach Anspruch 4, wobei die Seitenplatte (7) von den Sammlern (5, 6) und der oberen Platte (4) und der unteren Platte (8) beabstandet ist.

6. Elektrischer Flüssigkeitserhitzer nach einem der vorhergehenden Ansprüche, wobei die obere Platte (4) an mindestens einem der Endabschnitte einen erhöhten Abschnitt (4a, 4b) umfasst.

7. Elektrischer Flüssigkeitserhitzer nach einem der vorhergehenden Ansprüche, wobei die untere Platte (8) an mindestens einem der Endabschnitte einen erhöhten Abschnitt (8a, 8b) umfasst.

8. Elektrischer Flüssigkeitserhitzer nach Anspruch 5 oder 6, wobei der Einlass (2) und der Auslass (3) jeweils mit einem der erhöhten Abschnitte (4a, 4b, 8a, 8b) verbunden sind.

9. Elektrischer Flüssigkeitserhitzer nach einem der vorhergehenden Ansprüche, wobei sowohl der Einlass (2) als auch der Auslass (3) mit der oberen Platte (4) verbunden sind.

10. Elektrischer Flüssigkeitserhitzer nach einem der Ansprüche 1-8, wobei der Einlass (2) mit der oberen Platte (4) verbunden ist, während der Auslass (3) mit der unteren Platte (8) verbunden ist.

11. Elektrischer Flüssigkeitserhitzer nach Anspruch 7, wobei die Sammler (5, 6) ein Paar Vorsprünge (11) umfassen, die sich rechtwinklig zur Achse des ersten Rohrs (20a) und/oder des zweiten Rohrs (20b) erstrecken.

12. Elektrischer Flüssigkeitserhitzer nach einem der vorhergehenden Ansprüche, wobei zwischen dem ersten Rohr (20a) und dem zweiten Rohr (20b) ein oder mehrere weitere Rohre (20c) angeordnet sind.

## Revendications

1. Chauffe-fluide électrique pour un véhicule, comprenant un bloc de chauffage 1 comprenant une entrée (2) et une sortie (3) pour le fluide, un premier canal (100) pour le fluide destiné à s'écouler entre l'entrée (2) et la sortie (3), un premier tube (20a) et un deuxième tube (20b), **caractérisé en ce que** des extrémités opposées du premier tube (20a) et du deuxième tube (20b) sont montées dans des collecteurs (5, 6), les tubes (20a, 20b) comprenant des éléments chauffants (50) et le premier canal (100) étant délimité par une plaque supérieure (4) et une plaque inférieure (8) raccordées de manière étanche au premier tube (20a), au deuxième tube (20b) et aux collecteurs (5, 6).

2. Chauffe-fluide électrique selon la revendication 1, dans lequel le premier tube (20a) et le deuxième tube (20b) comprennent deux parois latérales (24) raccordant les grandes parois (21), la plaque supérieure (4) et la plaque inférieure (8) étant raccordées à des parois latérales (24) du premier tube (20a) et du deuxième tube (20b).

3. Fluide électrique selon l'une quelconque des revendications précédentes, dans lequel les grandes parois (21) du premier tube (20a) et du deuxième tube (20b) sont agencées perpendiculairement par rapport à la plaque supérieure (4) et à la plaque inférieure (8).

4. Chauffe-fluide électrique selon l'une quelconque des revendications précédentes, dans lequel une plaque latérale (7) est raccordée parallèlement au premier tube (20a) et/ou au deuxième tube (20b) sur l'extérieur du bloc chauffant (1).

5. Chauffe-fluide électrique selon la revendication 4, dans lequel la plaque latérale (7) est à distance des collecteurs (5, 6) et de la plaque supérieure (4) et de la plaque inférieure (8).

6. Chauffe-fluide électrique selon l'une quelconque des revendications précédentes, dans lequel la plaque supérieure (4) comprend au moins l'une des portions d'extrémité d'une section surélevée (4a, 4b).

7. Chauffe-fluide électrique selon l'une quelconque des revendications précédentes, dans lequel la plaque inférieure (8) comprend au moins l'une des portions d'extrémité d'une section surélevée (8a, 8b).

8. Chauffe-fluide électrique selon la revendication 5 ou la revendication 6, dans lequel l'entrée (2) et la sortie (3) sont chacune raccordées à l'une des portions surélevées (4a, 4b, 8a, 8b).

9. Chauffe-fluide électrique selon l'une quelconque des revendications précédentes, dans lequel à la fois l'entrée (2) et la sortie (3) sont raccordées à la plaque supérieure (4).

10. Chauffe-fluide électrique selon l'une quelconque des revendications 1 à 8, dans lequel l'entrée (2) est raccordée à la plaque supérieure (4), tandis que la sortie (3) est raccordée à la plaque inférieure (8).

11. Chauffe-fluide électrique selon la revendication 7, dans lequel les collecteurs (5, 6) comprennent une paire de saillies (11) s'étendant perpendiculairement à l'axe du premier tube (20a) et/ou du deuxième tube (20b).

12. Chauffe-fluide électrique selon l'une quelconque des revendications précédentes, dans lequel entre le premier tube (20a) et le deuxième tube (20b) se trouve un ou plusieurs tubes supplémentaires (20c).
